# EUROPÄISCHE PATENTSCHRIFT

(11) **EP 3 919 301 B1**
(45) Veröffentlichungstag und Bekanntmachung des Hinweises auf die Patenterteilung: **02.08.2023**
(21) Anmeldenummer: 21177101.9
(22) Anmeldetag: 01.06.2021
(51) Int. Cl.: B60J 1/20

(54) **ROLLOVORRICHTUNG UND VERFAHREN FÜR DIE MONTAGE EINER ROLLOVORRICHTUNG**
ROLLER BLIND DEVICE AND METHOD FOR MOUNTING A ROLLER BLIND DEVICE
DISPOSITIF DE STORE ROULANT ET PROCÉDÉ DE MONTAGE D'UN DISPOSITIF DE STORE ROULANT

(30) Priorität: 04.06.2020 DE 102020114877
(43) Veröffentlichungstag der Anmeldung: 08.12.2021
(73) Patentinhaber: HS Products Engineering GmbH, 82216 Maisach (DE)
(72) Erfinder: JULING, Ullrich, 83209 Prien (DE)
(74) Vertreter: Wietzke, Andreas

(56) Entgegenhaltungen:
- EP-A2- 1 787 839
- DE-A1-102014 225 896
- US-A1- 2005 150 617

## Beschreibung

Die vorliegende Erfindung betrifft eine Rollovorrichtung für eine Heckscheibe eines Fahrzeugs sowie ein Verfahren für die Montage einer Rollovorrichtung im Bereich einer Heckscheibe eines Fahrzeugs.

Es ist bekannt, dass Fahrzeugfenster mit Rollovorrichtungen versehen werden sollen, um die Einsichtnahme in den Innenraum des Fahrzeugs sowie das Eindringen von Sonnenstrahlen zumindest teilweise zu verhindern. Bekannte Rollovorrichtungen sind mit jeweils einem Rollobehang ausgestaltet, welcher zwischen einer Abdeckposition und einer Freigabeposition verstellbar und/oder bewegbar ist. Der Rollobehang ist üblicherweise auf einer Wickelwelle aufgewickelt, wenn er sich in der Freigabeposition befindet. Um den Rollobehang in die Abdeckposition zu bewegen, wird dieser von der Wickelwelle abgewickelt und entlang des Fahrzeugfensters aufgespannt. In der Praxis hat sich gezeigt, dass der Einbau der Rollovorrichtung einschließlich der Wickelwelle in die gewünschte Position im Fahrzeug aufgrund von Bauteiltoleranzen regelmäßig zu Problemen führt. Zum Ausgleich der vorhandenen Bauteiltoleranzen werden bislang seitliche Führungselemente der Rollovorrichtung manuell eingestellt. Eine gattungsgemäße Rollovorrichtung wird in der DE 10 2014 225896 A1 beschrieben

Aufgabe der vorliegenden Erfindung ist es, der voranstehend beschriebenen Problematik zumindest teilweise Rechnung zu tragen. Insbesondere ist es Aufgabe der vorliegenden Erfindung, eine Rollovorrichtung für eine kostengünstige und einfache Montage trotz gegebener Bauteiltoleranzen zu schaffen. Ferner ist es eine Aufgabe, ein Verfahren für die Montage einer solchen Rollovorrichtung zur Verfügung zu stellen.

Die voranstehende Aufgabe wird durch die Patentansprüche gelöst. Insbesondere wird die voranstehende Aufgabe durch die Rollovorrichtung gemäß Anspruch 1 sowie das Verfahren gemäß Anspruch 11 gelöst. Weitere Vorteile der Erfindung ergeben sich aus den Unteransprüchen, der Beschreibung und den Zeichnungen. Dabei gelten Merkmale und Details, die im Zusammenhang mit der Rollovorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird oder werden kann.

Gemäß einem ersten Aspekt der vorliegenden Erfindung wird eine Rollovorrichtung für eine Heckscheibe eines Fahrzeugs zur Verfügung gestellt. Die Rollovorrichtung weist einen Grundkörper mit einer Befestigungsschnittstelle für eine Befestigung des Grundkörpers im Innenraum des Fahrzeugs sowie eine am Grundkörper mittels einer Rotationslagerung drehbar um eine Wickelachse gelagerte Wickelwelle mit einem darauf auf- und abwickelbaren Rollobehang auf. Außerdem weist die Rollovorrichtung zwei seitliche Führungsvorrichtungen mit jeweils einem Führungsmittel zum Führen einer Behangstange des Rollobehangs bei einer Wickelbewegung auf. Die Wickelwelle weist an den beiden axialen Enden der Wickelwelle Montageschnittstellen für eine kraftübertragende Verbindung mit dem jeweiligen Führungsmittel der jeweiligen Führungsvorrichtung auf. Zudem ist die Wickelwelle mittels einer Ausgleichslagerung am Grundkörper für eine Ausgleichsbewegung der Wickelachse bei der Montage gelagert. Die Montageschnittstellen sind, für eine Spannbewegung zwischen einer Vorspannposition und einer Montageposition durch eine Spannkraft, gelagert und der Grundkörper und/oder die Führungsvorrichtungen weisen Betätigungsmittel für eine Bewegung der Montageschnittstellen zwischen der Montageposition und der Vorspannposition auf.

Damit kann die Montage der Rollovorrichtung vereinfacht werden. Gemäß einer Variante können die Montageschnittstellen in einer Vorspannposition mit einer Vorspannkraft in Richtung der Montageposition vorgespannt sein und der Grundkörper und/oder die Führungsvorrichtungen können die Betätigungsmittel oder Auslösemittel aufweisen für ein Lösen der Vorspannung für eine Bewegung der Montageschnittstellen in die Montageposition. Die Betätigungsmittel können einen Hebel mit einem Lagerabschnitt aufweisen, an welchem die Montageschnittstellen in der Vorspannposition gehalten werden. In dieser Position kann beispielsweise eine Feder an jeweils einer der Montageschnittstellen, bevorzugt im Grundkörper, zusammengedrückt positioniert sein. Die Hebel können jeweils für eine Schwenkbewegung zum Beabstanden des Lagerabschnitts von jeweils einer Montageschnittstelle und damit zum Ermöglichen einer axialen Eingriffsbewegung der Montageschnittstellen schwenkbar gelagert sein. Sobald der Lagerabschnitt von der Montageschnittstelle beabstandet ist, kann die gespannte Feder die Montageschnittstelle von der Vorspannposition in die Montageposition bewegen. Unter der Montageposition ist jeweils eine Position einer Montageschnittstelle in den Führungsvorrichtungen, beispielsweise in einer Umlenkrolle, bevorzugt im fertig montierten Zustand der Rollovorrichtung im Fahrzeug, zu verstehen. Von Vorteil kann es sein, wenn die Führungsvorrichtungen, insbesondere mittels jeweils einer Stirnseite der Führungsvorrichtungen, zum Auslenken der Hebel während einer Relativbewegung zwischen den Führungsvorrichtungen und den Hebeln zum Durchführen der Schwenkbewegung, ausgestaltet und angeordnet sind. Auch damit kann der Montagevorgang vereinfacht werden. Weiterhin ist es möglich, dass die Betätigungsmittel jeweils an einer Stirnseite der Führungsvorrichtungen in Form einer schiefen Ebene ausgestaltet sind, wobei die Montageschnittstellen bei einer Montagebewegung der Führungsvorrichtungen durch eine Relativbewegung zu den Führungsvorrichtungen entlang der schiefen Ebenen aus der Montageposition in die Vorspannposition drückbar sind. Bei einer Weiterführung der Montagebewegung können die Montageschnittstellen schließlich in die Führungsvorrichtungen, insbesondere jeweils in eine dort gelagerte Umlenkrolle, einschnappen und sich hierbei von der Vorspannposition in die Montageposition zurückbewegen. Unter den Montageschnittstellen können Montageverbindungsbauteile und/oder entsprechende Bauteileinheiten verstanden werden.

Mittels der erfindungsgemäßen Ausgleichslagerung kann die Montage der Rollovorrichtung trotz der üblichen Toleranzen der Funktionsbauteile kostengünstig und einfach durchgeführt werden. Unter Verwendung der Ausgleichslagerung kann bei der Montage der Rollovorrichtung die Ausgleichsbewegung in Form einer Taumelbewegung der Wickelachse ermöglicht werden. D. h., die Wickelachse und/oder die Wickelwelle können während der Montage bzw. während einem Einbau der Rollovorrichtung in die gewünschte Position im Fahrzeug in einem Höhenversatz und/oder einem seitlichen Versatz bewegt werden. Sobald die Rollovorrichtung im Fahrzeug montiert ist, ist auch eine Auslenkung der Wickelachse gemäß der Ausgleichsbewegung gehemmt. D. h., die Ausgleichsbewegung und/oder die entsprechende Taumellagerung der Wickelachse und/oder der Wickelwelle dient insbesondere zum einmaligen Einstellen der Wickelwelle im und/oder am Grundkörper, um hierbei den gegebenen Bauteiltoleranzen Rechnung zu tragen.

Die Ausgleichslagerung kann einen Ausgleichsfreiheitsgrad in einer Höhenrichtung und/oder einer Radialrichtung für die Wickelachse vorgeben. Dies kann durch eine Lagerung der Ausgleichslagerung für eine Bewegung der Ausgleichslagerung in der Höhenrichtung und/oder der Radialrichtung realisiert werden. In Axialrichtung bzw. einer Längsrichtung der Wickelwelle ist die Ausgleichslagerung vorzugsweise bewegungsfrei und/oder ohne zerstörungsfreie Bewegungsmöglichkeit positioniert.

Die Führungsvorrichtung kann zwei Führungsschienen umfassen, die im Bereich der C-Säulen des Fahrzeugs zur Inbetriebnahme der Rollovorrichtung installierbar sind. Das Führungsmittel kann in jeweils einer der Führungsschienen geführt werden. Die Führungsschienen können jeweils einen C-Förmigen Querschnitt zum Führen der Führungsmittel aufweisen. In und/oder an den Führungsschienen kann jeweils ein Seilzugsystem zum Bewegen der Führungsmittel in den Führungsschienen ausgestaltet sein.

Die Ausgleichslagerung kann an einem ersten Lagerbereich am Grundkörper und an einem zweiten Lagerbereich direkt oder indirekt an der Wickelwelle gelagert sein. Die Ausgleichslagerung kann am ersten Lagerbereich und/oder am zweiten Lagerbereich ein Lagerspiel zur Realisierung der Ausgleichslagerung aufweisen. Im ersten Lagerbereich kann ein C- und/oder U-förmiger Lagerabschnitt zum Lagern eines kugel- oder scheibensegmentförmigen Lagerkopfes der Ausgleichslagerung ausgestaltet sein. Im zweiten Lagerbereich kann die Ausgleichslagerung eine Durchgangsöffnung, insbesondere eine Durchgangsbohrung zum direkten oder indirekten Lagern der Wickelwelle, aufweisen. Die Ausgleichslagerung kann ein einstückiges und/oder monolithisches Ausgleichslagerelement aufweisen, an welchem der Lagerkopf sowie die Durchgangsöffnung ausgestaltet sind. Die Ausgleichslagerung kann zwei Lagerteile zur direkten oder indirekten Lagerung von jeweils einem Endabschnitt der Wickelwelle aufweisen. Wenigstens ein Lagerteil kann plattenförmig oder im Wesentlichen lattenförmig ausgestaltet sein.

Der Grundkörper ist der Form der Wickelwelle angepasst und entsprechend mit einer um ein Vielfaches längeren Länge als Breite und/oder Höhe ausgestaltet. Die Länge des Grundkörpers ist beispielsweise um wenigstens das Dreifache länger als die Höhe und/oder die Breite des Grundkörpers. Unter der Befestigungsschnittstelle kann ein vordefinierter Abschnitt am Grundkörper verstanden werden, an welchem der Grundkörper stabil im Fahrzeug befestigt werden kann. So kann die Befestigungsschnittstelle beispielsweise Rastmittel und/oder Durchgangslöcher zur Befestigung des Grundkörpers im Fahrzeug aufweisen.

Die Wickelwelle ist vorzugsweise mehrteilig aufgebaut. Insbesondere kann die Wickelwelle Funktionsbauteile wie eine Rotationslagerung, einen Lagerungskörper und/oder die Montageschnittstellen aufweisen. Unter der kraftübertragenden Verbindung zwischen der Wickelwelle bzw. den Montageschnittstellen und dem jeweiligen Führungsmittel kann eine mechanische Verbindung durch eine Verbindungseinheit der Rollovorrichtung verstanden werden. D. h., die Verbindung muss nicht direkt ausgestaltet sein, sondern ist insbesondere indirekt, also durch die Verbindungseinheit, ausgestaltet. Die Verbindungseinheit kann einen Seilzug mit Umlenkrollen aufweisen, wobei jeweils eine Umlenkrolle für einen Eingriff mit einer Montageschnittstelle bereitgestellt ist und jede Umlenkrolle durch den Seilzug mit jeweils einem der Führungsmittel verbunden sein kann. So können Kraft und/oder ein Drehmoment von der Wickelwelle bzw. den Montageschnittstellen über die Umlenkrollen und den Seilzug auf die Führungsmittel und von dort wiederum auf die Behangstange übertragen werden.

Während der Montage kann die Wickelwelle durch die Ausgleichslagerung in einer Axialrichtung sowie in einer Höhen- und/oder Seitenrichtung bewegt werden. D.h., die Ausgleichslagerung ist für eine Montagebewegung der Wickelwelle in Axialrichtung, in Höhenrichtung und/oder in Seitenrichtung der Wickelwelle ausgestaltet. Sobald die Wickelwelle bzw. die Rollovorrichtung im Fahrzeug montiert ist, kann sich die Wickelwelle vorzugsweise nur noch um die Wickelachse drehen bzw. dort rotieren. Eine weitere Bewegung ist gehemmt.

Weiterhin ist es möglich, dass die Behangstange bei einer Rollovorrichtung gemäß der vorliegenden Erfindung an ihren beiden axialen Enden Führungsschnittstellen aufweist für eine Bewegung der Behangstange aus einer Lagerposition in eine Führungsposition zur Ausbildung der kraftübertragenden Verbindung mit dem jeweiligen Führungsmittel. Damit kann ein nachträgliches Einrasten der Führungsschnittstellen in die Führungsmittel, also ein Einrasten der Führungsschnittstellen nach dem Einrasten der Montageschnittstellen, ermöglicht werden. Dies vereinfacht die Montage der Rollovorrichtung. Insbesondere können die Montageschnittstellen unter Verwendung der Ausgleichslagerung schnell und einfach in den Führungsvorrichtungen positioniert werden. Etwaige Gegenkräfte durch eine bereits verrastete Behangstange können verhindert werden. Zur Ausbildung der kraftübertragenden Verbindung kann die Rollovorrichtung ein Gleitlager für eine, vorzugsweise manuelle, verschiebende Bewegung der Behangstange aus der Lagerposition in die Führungsposition aufweisen. Die Führungsschnittstellen können Kugelköpfe aufweisen, die in korrespondierende Kugelkopfaufnahmen der Führungsmittel einschiebbar und/oder einrastbar sind.

Außerdem ist es möglich, dass bei einer erfindungsgemäßen Rollovorrichtung die Rotationslagerung an einem Lagerungskörper ausgebildet ist, welcher mittels der Ausgleichslagerung am Grundkörper gelagert ist. Der Lagerungskörper kann mithin als Adapterbauteil verstanden werden, durch welches die Rotationslagerung indirekt an der Ausgleichslagerung gelagert werden kann. Die Dimension der Rotationslagerung kann damit vorteilhaft an die Geometrie des Rollobehangs angepasst werden. Auf die Geometrie der Ausgleichslagerung muss grundsätzlich keine oder kaum Rücksicht genommen werden. Die Rotationslagerung, der Lagerungskörper und die Ausgleichslagerung können als separate, vorzugsweise jeweils einstückige, Bauteile ausgestaltet sein.

Bei einer weiteren Ausgestaltungsvariante der vorliegenden Erfindung kann die Behangstange bei einer Rollovorrichtung eine Behangstange-Kompensationseinheit zur federnden Lagerung der Behangstange bezüglich der Wickelachse aufweisen. Damit kann eine Schiefstellung der Wickelwelle zu einer Hutablage im Fahrzeug auf einfache Weise kompensiert werden. Insbesondere kann die Behangstange eine Behangstange-Kompensationseinheit mit einer Abdeckung aufweisen, welche federnd bezüglich der Wickelachse gelagert ist für eine ausgleichende Abdeckung eines Wickelschlitzes der Rollovorrichtung. Die Behangstange-Kompensationseinheit kann beispielsweise wenigstens ein Federelement zur federnden Lagerung der Behangstange aufweisen.

Von weiterem Vorteil kann es sein, wenn bei einer Rollovorrichtung gemäß der vorliegenden Erfindung wenigstens eines der Führungsmittel eine Führungsmittel-Kompensationseinheit aufweist für einen federnden Ausgleich der Behangstange in einer Höhenrichtung. Auch damit lässt sich eine Schiefstellung der Behangstange kompensieren. Ferner kann ein Ausgleich beim Aufwickeln des Rollobehangs auf die Wickelwelle sowie bei einem Anschlag in einer offenen bzw. ausgerollten Position des Rollobehangs geschaffen werden. Die Führungsmittel-Kompensationseinheit kann wenigstens ein Federelement zum federnden Lagern einer Behangstange-Aufnahme im Führungsmittel aufweisen.

Bei einer Rollovorrichtung gemäß der vorliegenden Erfindung kann eine Antriebsvorrichtung für eine Übertragung einer Antriebskraft auf die Wickelwelle und/oder auf die Führungsmittel zur Durchführung der Wickelbewegung bereitgestellt sein. Mit Hilfe der Antriebsvorrichtung kann die Rollovorrichtung automatisiert, beispielsweise abhängig von einem Lichteinfall und/oder einer Temperatur im Fahrzeug, angetrieben werden. Gleichwohl kann die Rollovorrichtung auch zur manuellen Bedienbarkeit ausgestaltet sein. Die Antriebsvorrichtung kann einen Elektromotor zum Antreiben der Wickelwelle aufweisen. Der Elektromotor kann über eine Welle, insbesondere eine Flexwelle mit gekrümmtem Wellenverlauf, mit dem Wickelwelle direkt oder indirekt in kraftübertragender Verbindung stehen. Die Antriebsvorrichtung kann wenigstens ein Funktionsbauteil aufweisen, das am Grundkörper und/oder an wenigstens einer Führungsvorrichtung befestigt ist. Damit können die Antriebsvorrichtung und entsprechend auch die Rollovorrichtung kompakt zur Verfügung gestellt werden.

Darüber hinaus ist es möglich, dass bei einer erfindungsgemäßen Rollovorrichtung die Antriebsvorrichtung am Grundkörper angeordnet ist und ein Getriebe aufweist für eine Übertragung der Antriebskraft auf die Wickelwelle und/oder die Führungsmittel. Damit kann auf einfache und kompakte Weise eine vormontierte und motorisierte Rollovorrichtung zur Verfügung gestellt werden. Es ist keine separate Montage des Antriebs erforderlich. Die Antriebsvorrichtung kann direkt oder indirekt am Grundkörper befestigt sein. Genauer gesagt können Funktionsbauteile der Antriebsvorrichtung direkt am Grundkörper befestigt sein und andere Funktionsbauteile der Antriebsvorrichtung können indirekt am Grundkörper befestigt sein. Das Getriebe kann wenigstens eine Übersetzung und/oder wenigstens ein Zahnrad aufweisen. Unter dem Getriebe kann ein Maschinenelement zur Veränderung von Bewegungsgrößen verstanden werden. Durch das Getriebe können Bewegungsgrößen der Antriebsvorrichtung, insbesondere des Motors, in gewünschte Bewegungsgrößen zum Bewegen der Wickelwelle umgewandelt werden.

Bei einer erfindungsgemäßen Rollovorrichtung kann die Antriebsvorrichtung ferner einen Flachläufermotor für einen Direktantrieb einer der Montageschnittstellen aufweisen. Damit lässt sich eine besonders kompakte Rollovorrichtung realisieren. Der Flachläufermotor kann einen Läufer aufweisen, welcher direkt als eine der Montageschnittstellen ausgestaltet sein kann. Dadurch lässt sich die Kompaktheit der Rollovorrichtung weiter verbessern. Bei der erfindungsgemäßen Verwendung des Flachläufermotors kann auf ein separates Getriebe verzichtet werden. Dadurch lassen sich Platz, Gewicht und Kosten sparen. Der Flachläufermotor kann bei einer vorteilhaften Weiterbildung für eine kompakte Bauweise ferner direkt an wenigstens einer der Führungsvorrichtungen ausgestaltet sein.

Darüber hinaus können die Führungsvorrichtungen bei einer Rollovorrichtung gemäß der vorliegenden Erfindung jeweils ein Seilzugsystem aufweisen für einen Antrieb der Behangstange in einer Auszugsrichtung. Ein Seilzugsystem lässt sich platzsparend und robust in den Führungsvorrichtungen installieren. Mit Hilfe des Seilzugsystems kann ein aktives Ausziehen des Rollobehangs kostengünstig realisiert werden. Ein Einzug des Rollobehangs kann durch ein Aufwickeln des Rollobehangs auf der Wickelwelle bzw. durch Drehen der Wickelwelle durch die Antriebsvorrichtung umgesetzt werden.

Gemäß einem weiteren Aspekt der vorliegenden Erfindung wird ein Verfahren für die Montage einer wie vorstehend im Detail beschriebenen Rollovorrichtung zur Verfügung gestellt. Das Verfahren weist die folgenden Schritte auf:
- Montieren des Grundkörpers im Innenraum des Fahrzeugs,
- Montieren von jeweils einer Führungsvorrichtung in jeweils einer C-Säule des Fahrzeugs,
- Ausbilden einer kraftübertragenden Verbindung zwischen den Führungsmitteln und den Montageschnittstellen, und
- Ausgleichen von Fertigungstoleranzen mittels einer Ausgleichsbewegung der Wickelachse durch die Ausgleichslagerung.

Damit bringt das Verfahren die gleichen Vorteile mit sich, wie sie vorstehend mit Bezug auf die erfindungsgemäße Rollovorrichtung beschrieben worden sind. Durch die Ausgleichsbewegung der Wickelachse resultiert eine Ausgleichsbewegung der Wickelwelle. D. h., unter der Ausgleichsbewegung der Wickelachse kann auch eine Ausgleichsbewegung der Wickelwelle verstanden werden. Die aufgezählten Verfahrensschritte müssen nicht in der beschriebenen Reihenfolge durchgeführt werden. So können beispielsweise die ersten beiden Schritte auch vertauscht durchgeführt werden oder die letzten beiden Schritte können zumindest teilweise gleichzeitig durchgeführt werden. Das Ausbilden der kraftübertragenden Verbindung zwischen den Führungsmitteln und den Montageschnittstellen kann beispielsweise durch ein Seilzugsystem realisiert werden, indem wenigstens eine Montageschnittstelle an einer Umlenkrolle des Seilzugsystems befestigt wird, wobei die Umlenkrolle und wenigstens ein Führungsmittel durch ein Seil in kraftübertragender Verbindung stehen. Das Ausgleichen der Fertigungstoleranzen mittels der Ausgleichsbewegung kann durch ein manuelles bewegen der Wickelwelle relativ zu den Führungsmittels realisiert werden, wobei die Führungsmittel direkt oder indirekt Kraft auf die Ausgleichslagerung zum Auslenken der Ausgleichslagerung gemäß der Ausgleichsbewegung übertragen.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind.

Es zeigen jeweils schematisch:
- Figur 1: eine perspektivische Darstellung einer Rollovorrichtung gemäß einer ersten Ausführungsform der vorliegenden Erfindung,
- Figur 2: eine alternative perspektivische Darstellung der Rollovorrichtung gemäß der ersten Ausführungsform der vorliegenden Erfindung,
- Figur 3: eine perspektivische Detaildarstellung der Rollovorrichtung gemäß der ersten Ausführungsform der vorliegenden Erfindung,
- Figur 4: eine weitere perspektivische Detaildarstellung der Rollovorrichtung gemäß der ersten Ausführungsform der vorliegenden Erfindung,
- Figuren 5 bis 8: Detaildarstellungen der Rollovorrichtung gemäß der ersten Ausführungsform zum Erläutern einer Rastfunktion,
- Figuren 9 bis 14: Detaildarstellungen der Rollovorrichtung gemäß einer zweiten Ausführungsform zum Erläutern einer Rastfunktion,
- Figuren 15 bis 17: Detaildarstellungen der Rollovorrichtung gemäß der ersten Ausführungsform zum Erläutern einer Ausgleichsbewegung,
- Figur 18: ein Flussdiagramm zum Erläutern eines Verfahrens gemäß der ersten Ausführungsform der vorliegenden Erfindung, und
- Figur 19: ein Fahrzeug mit einer Rollovorrichtung gemäß der ersten Ausführungsform der vorliegenden Erfindung, und

Elemente mit gleicher Funktion und Wirkungsweise sind in den Figuren jeweils mit den gleichen Bezugszeichen versehen.

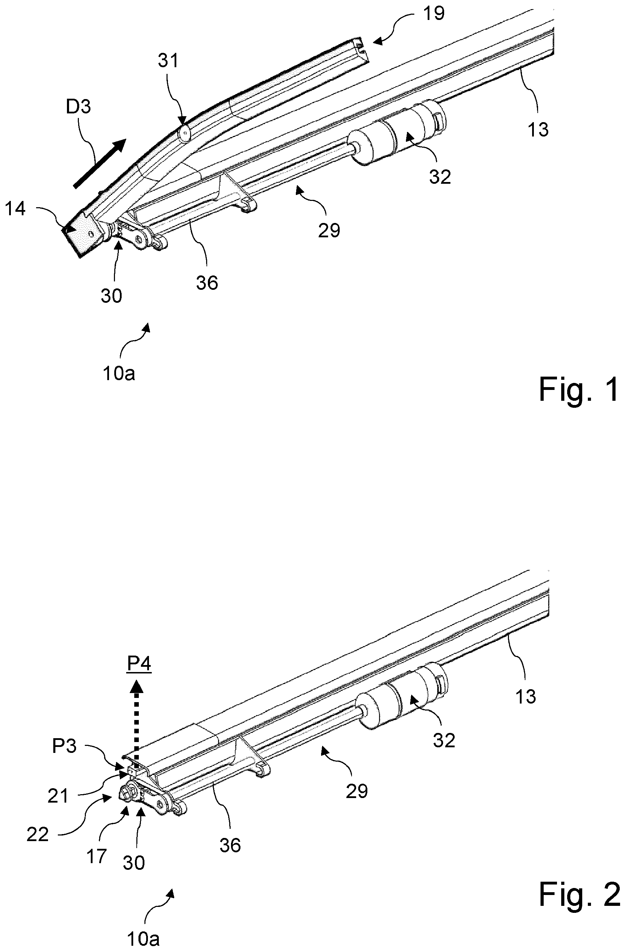

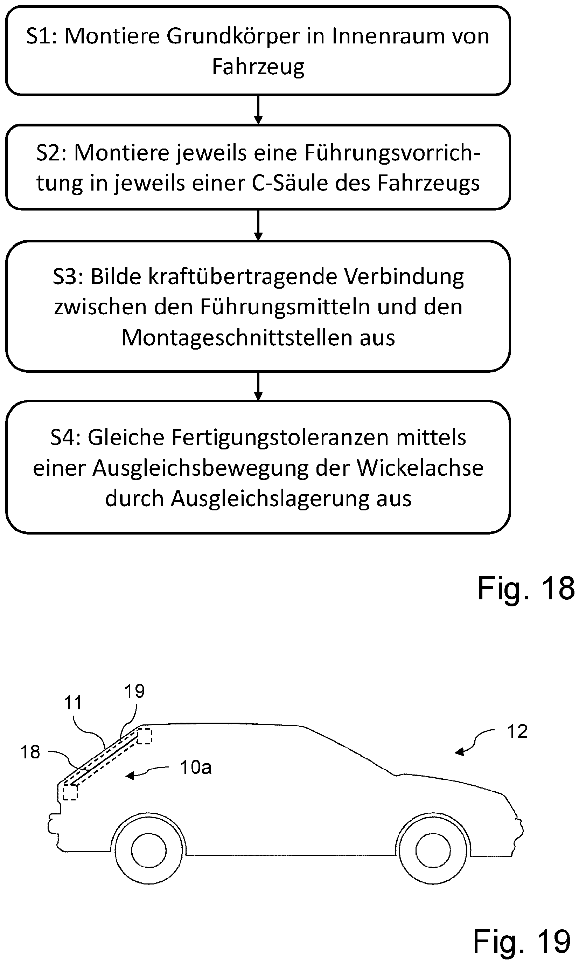

Fig. 1 zeigt eine Rollovorrichtung 10a für eine in Fig. 19 dargestellte Heckscheibe 11 eines Fahrzeugs 12 gemäß einer ersten Ausführungsform. Die Rollovorrichtung 10a weist einen Grundkörper 13 mit einer Befestigungsschnittstelle 14 für eine Befestigung des Grundkörpers 13 im Innenraum des Fahrzeugs 12 auf. Die in Fig. 1 dargestellte Rollovorrichtung 10a weist ferner eine Antriebsvorrichtung 29 mit einem Getriebe 30 und einem Elektromotor 32 auf. Der Elektromotor 32 ist durch eine Welle 36 mit dem Getriebe 30 kraftübertragend verbunden. Die Antriebsvorrichtung 29 ist am Grundkörper 23 angeordnet. In Fig. 1 ist ferner eine von zwei Führungsvorrichtungen 19 der Rollovorrichtung 10a dargestellt. Die dargestellte Führungsvorrichtung 19 weist ein Seilzugsystem 31 für den Antrieb einer später beschriebenen Behangstange 21 in einer Auszugsrichtung D3 auf.

Fig. 2 zeigt die in Fig. 1 dargestellte Rollovorrichtung 10a ohne Führungsvorrichtung 19. So können in Fig. 2 eine am Grundkörper 13 gelagerte Wickelwelle 17 mit einer Montageschnittstelle 22 sowie eine Behangstange 21 erkannt werden. Wie in Fig. 2 dargestellt, kann die Behangstange 21 von einer Lagerposition P3, in welcher sich die Behangstange 21 in Fig. 2 befindet, in eine Führungsposition P4 bewegt werden. Das Getriebe 30 ist für eine Übertragung der Antriebskraft auf die Wickelwelle 17 konfiguriert.

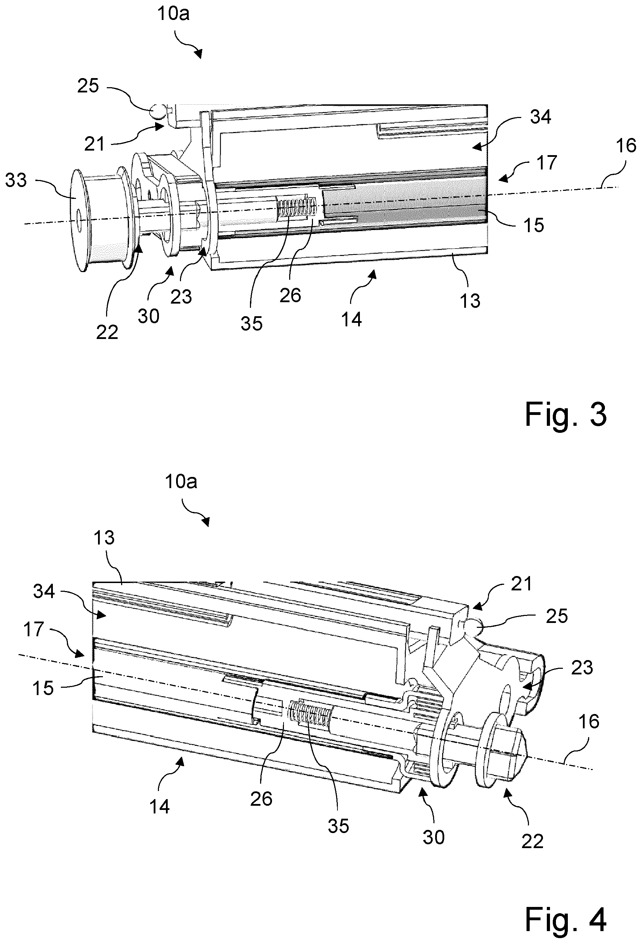

Fig. 3 zeigt eine Detailansicht der Rollovorrichtung 10a. Wie in Fig. 3 zu erkennen, ist die Wickelwelle 17 mittels einer Rotationslagerung 15 drehbar um eine Wickelachse 16 gelagert. In einem Rollobehangraum 34 kann sich ein auf die Wickelwelle 17 auf- und abwickelbarer Rollobehang 18 befinden. In Fig. 3 ist ferner dargestellt, dass die Wickelwelle 17 mittels einer Ausgleichslagerung 23 am Grundkörper 13 für eine Ausgleichsbewegung der Wickelachse 16 bei der Montage gelagert ist. Außerdem ist dargestellt, dass die Behangstange 21 an ihren beiden axialen Enden bzw. am dargestellten einen axialen Ende eine Führungsschnittstelle 25 mit einem Kugelkopf aufweist. Die Rotationslagerung 15 ist an einem Lagerungskörper 26 ausgebildet, welcher mittels der Ausgleichslagerung 23 am Grundkörper 13 gelagert ist und ein Kupplungselement für eine kraftübertragende Verbindung zwischen der Rotationslagerung 15 und der Montageschnittstelle 22 bildet. Zwischen dem Lagerungskörper 26 und der Montageschnittstelle 22 ist ferner ein Federelement 35 in Form einer Schraubenfeder für eine federnde Lagerung der Montageschnittstelle gegenüber dem Lagerungskörper 26 angeordnet. In Fig. 3 ist darüber hinaus noch eine Umlenkrolle 33 gezeigt, welche form- und kraftschlüssig mit der Montageschnittstelle 22 verbunden ist und für eine Positionierung in der Führungsvorrichtung 19 vorgesehen ist. Fig. 4 zeigt ein anderes axiales Ende der Rollovorrichtung 10a, also das, das in Fig. 3 nicht dargestellt ist. In Fig. 4 wurde auf die Darstellung der Umlenkrolle 33 verzichtet, sodass die Montageschnittstelle 22 besser zu erkennen ist.

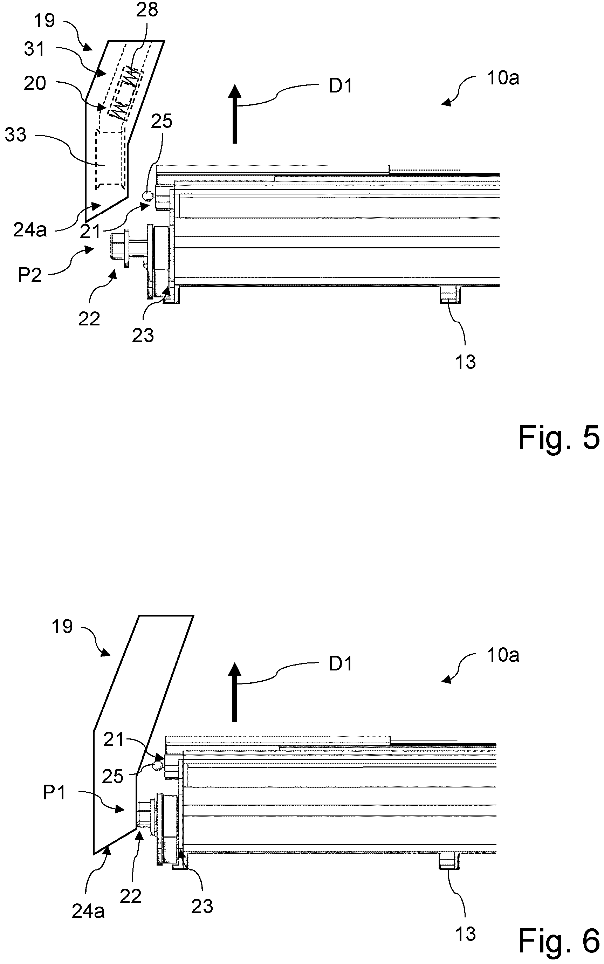

In den Figuren 5 bis 8 sind Detaildarstellungen der Rollovorrichtung 10a zum Erläutern einer Rast- bzw. Verbindungsfunktion während der Montage der Rollovorrichtung 10a gezeigt. Bei der in Fig. 5 dargestellten Rollovorrichtung 10a ist in der Führungsvorrichtung 19 ein Führungsmittel 20 zum Führen der Behangstange 21 bei einer Wickelbewegung der Wickelwelle 17 zu erkennen.

Die dargestellte Wickelwelle 17 weist am dargestellten axialen Ende der Wickelwelle 17 eine Montageschnittstelle 22 für eine kraftübertragende Verbindung mit dem Führungsmittel 20 der Führungsvorrichtung 19 auf. Das Führungsmittel 20 steht über das Seilzugsystem 31 mit der Umlenkrolle 33 in kraftübertragender Verbindung. Das in Fig. 5 dargestellte Führungsmittel 20 weist eine Führungsmittel-Kompensationseinheit 28 für einen federnden Ausgleich der Behangstange 21 in einer Höhenrichtung D1 auf. Die Führungsvorrichtung 19 weist ein Betätigungsmittel 24a in Form einer schiefen Ebene an einer Stirn- bzw. Endseite der Führungsvorrichtung 19 auf. Die Montageschnittstelle 22 befindet sich in Fig. 5 in einer Montageposition P2.

Wird die Führungsvorrichtung 19 nun, wie in Fig. 6 dargestellt, an die Montageschnittstelle 22 bewegt, wird diese durch das Betätigungsmittel 24a bzw. die schiefe Ebene der Führungsvorrichtung 19 entgegen der Federkraft des Federelements 35 in die Vorspannposition P1 gedrückt. D. h., die Montageschnittstelle 22 ist für eine Spannbewegung zwischen der Vorspannposition P1 und der Montageposition P2 gelagert und die Führungsvorrichtung 19 weist das Betätigungsmittel 24a für eine Bewegung der Montageschnittstelle 22 zwischen der Montageposition P2 und der Vorspannposition P1 auf.

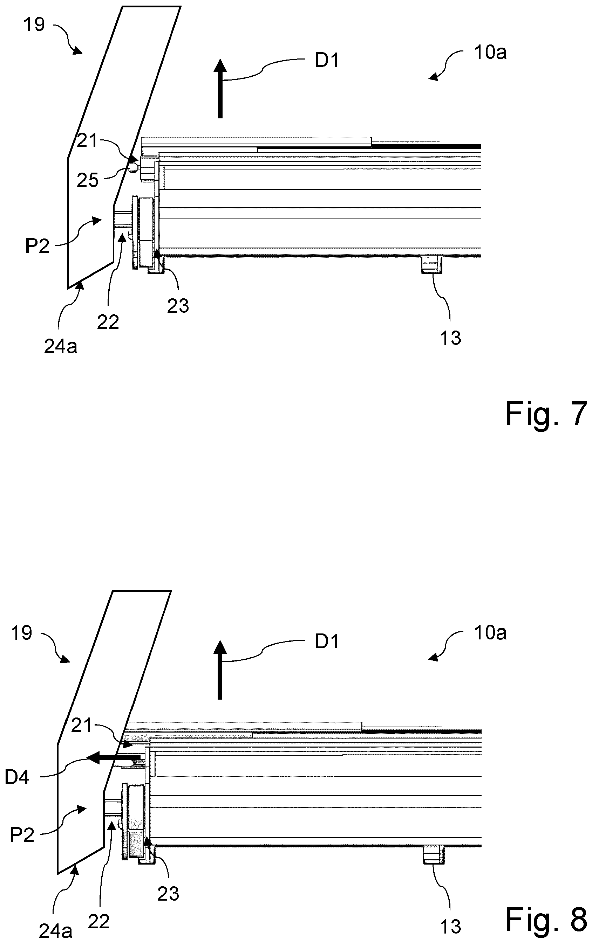

Sobald die Führungsvorrichtung 19, wie in Fig. 7 dargestellt, ausreichend weit an der Montageschnittstelle 22 vorbei bewegt wurde, kann diese in die (in Fig. 7 nicht gezeigte) Umlenkrolle 33 einschnappen und sich entsprechend aus der Vorspannposition P1 wieder in die Montageposition P2 bewegen. Anschließend kann, wie in Fig 8 dargestellt, die Behangstange 21 entlang der Schubrichtung D4 in das (nicht dargestellte) Führungsmittel 20 eingeschoben werden. Nun besteht die kraftübertragende Verbindung zwischen der Wickelwelle 17 und dem Führungsmittel 20.

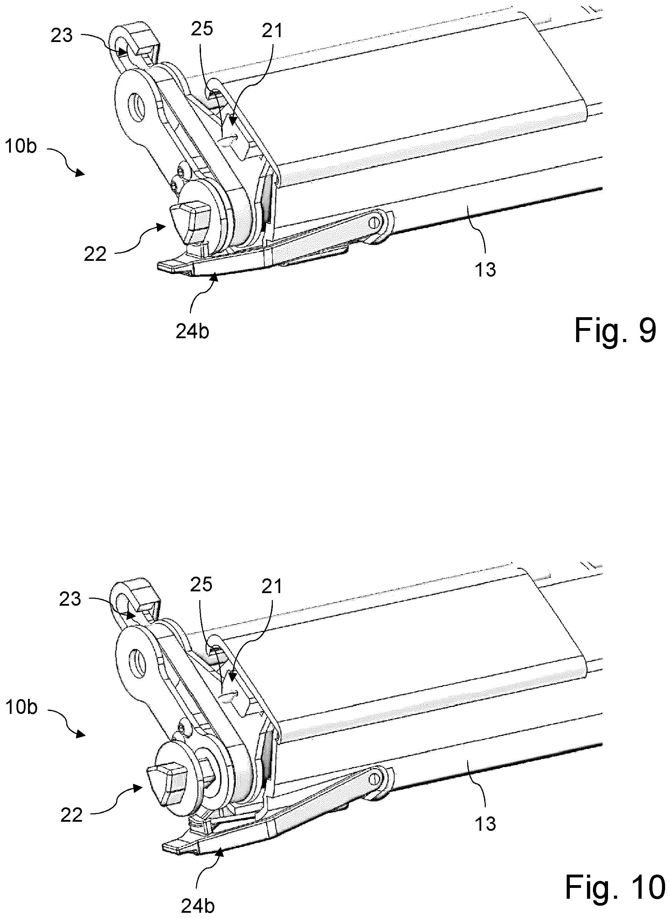

Figuren 9 und 10 zeigen eine Rollovorrichtung 10a gemäß einer zweiten Ausführungsform. Diese Ausführungsform unterscheidet sich insbesondere durch das Betätigungsmittel 24b von der vorstehend beschriebenen Ausgestaltungsvariante der Rollovorrichtung 10a. Das in den Figuren 9 und 10 gezeigte Betätigungsmittel 24b weist einen Hebel mit einem Lagerabschnitt auf, an welchem die Montageschnittstelle 22 in der Vorspannposition P1 gehalten werden kann.

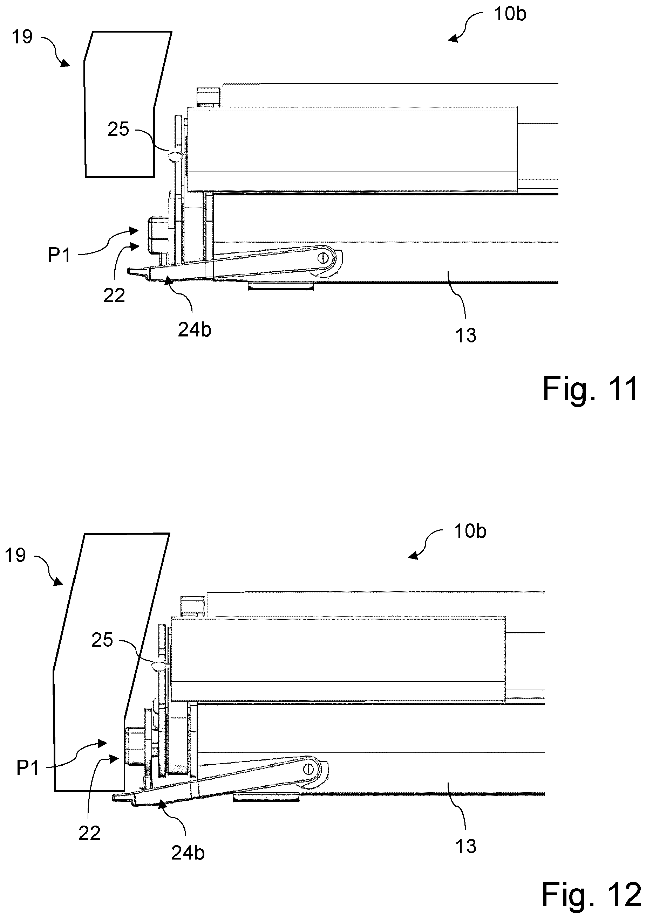

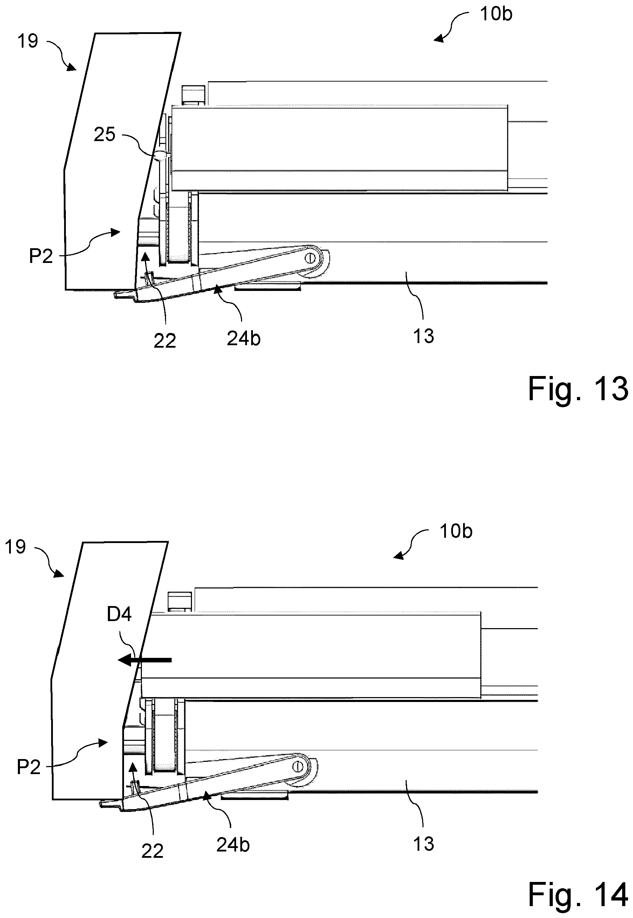

In den Figuren 11 bis 14 sind Detaildarstellungen der Rollovorrichtung 10b zum Erläutern einer Rastfunktion während der Montage der Rollovorrichtung 10b mit dem Betätigungsmittel 24b gemäß der zweiten Ausführungsform gezeigt. In Fig. 11 wird die Montageschnittstelle 22 noch durch das Betätigungsmittel 24b in Form des Hebels in der Vorspannposition P1 gehalten. Wird nun, wie in den Figuren 12 und 13 dargestellt, die Führungsvorrichtung 19 mit ihrer Stirnseite auf den Endabschnitt des Hebels 24b geschoben, wird dieser aus einer Sperrposition in eine Freigabeposition ausgelenkt und das gespannte Federelement 35 drückt die Montageschnittstelle 22 von der Vorspannposition P1 in die Montageposition P2 und dadurch wie gewünscht automatisch in die Umlenkrolle 33. Anschließend kann, wie in Fig. 14 dargestellt, die Behangstange 21 entlang der Schubrichtung D4 in das Führungsmittel 20 zur Herstellung der kraftübertragenden Verbindung zwischen der Wickelwelle 17 und dem Führungsmittel 20 eingeschoben werden.

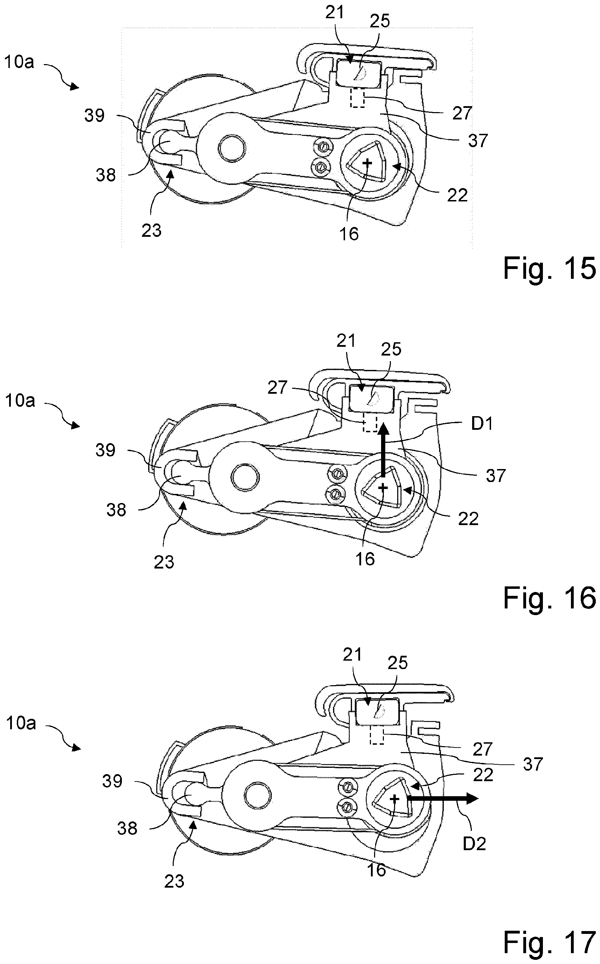

In den Figuren 15 bis 17 ist eine Rollovorrichtung 10a gemäß der ersten Ausführungsform mit einer Behangstange-Kompensationseinheit 27 zur federnden Lagerung der Behangstange 21 orthogonal zur Wickelachse 16 dargestellt. Mit Bezug auf die Figuren 15 bis 17 wird anschließend ferner die Ausgleichslagerung 23 im weiteren Detail beschrieben. Betrachtet man die Figuren 15 bis 17 nacheinander, so sieht man die ausgleichende Taumelbewegung der Ausgleichslagerung 23 in einer Höhenrichtung von Fig. 15 zu Fig. 16 und in einer Radialrichtung D2 bzw. Breiterichtung von Fig. 16 zu Fig. 17. Die in den Figuren 15 bis 17 dargestellte Ausgleichslagerung 23 weist ein plattenförmiges Ausgleichslagerelement 37 mit einem teilscheibenförmigen Lagerzapfen 38 auf, der für die Ausgleichsbewegung bewegbar in einem U-förmigen Ausgleichsaufnahmeabschnitt 39 gelagert ist.

Fig. 18 zeigt ein Flussdiagramm zum Erläutern eines Verfahrens für die Montage einer wie vorstehend beschriebenen Rollovorrichtung 10a. Bei einem ersten Schritt S1 wird der Grundkörper 13 im Innenraum des Fahrzeugs 12 montiert. Anschließend wird in einem zweiten Schritt S2 jeweils eine der Führungsvorrichtungen 19 in jeweils einer C-Säule des Fahrzeugs 12 montiert. Daraufhin wird in einem dritten Schritt S3 eine kraftübertragenden Verbindung zwischen den Führungsmitteln 20 und den Montageschnittstellen 22 ausgebildet. Hierbei können gemäß einem vierten Schritt Fertigungstoleranzen mittels einer Ausgleichsbewegung der Wickelachse 16 durch die Ausgleichslagerung 23 ausgeglichen werden.

In Fig. 19 ist ein Fahrzeug 12 mit einer wie vorstehend beschriebenen Rollovorrichtung 10a mit einem Rollobehang 18 für eine Beschattung im Bereich einer Heckscheibe 11 des Fahrzeugs 12 dargestellt.

Die Erfindung lässt neben den dargestellten Ausführungsformen weitere Gestaltungsgrundsätze zu. D. h., die Erfindung soll nicht auf die mit Bezug auf die Figuren erläuterten Ausführungsbeispiele beschränkt betrachtet werden. So ist es beispielsweise möglich, dass die Antriebsvorrichtung 29 einen Flachläufermotor für einen Direktantrieb von einer der Montageschnittstellen 22 aufweist.

### Bezugszeichen

- 10a: Rollovorrichtung
- 10b: Rollovorrichtung
- 11: Heckscheibe
- 12: Fahrzeug
- 13: Grundkörper
- 14: Befestigungsschnittstelle
- 15: Rotationslagerung
- 16: Wickelachse
- 17: Wickelwelle
- 18: Rollobehang
- 19: Führungsvorrichtung
- 20: Führungsmittel
- 21: Behangstange
- 22: Montageschnittstelle
- 23: Ausgleichslagerung
- 24a: Betätigungsmittel
- 24b: Betätigungsmittel
- 25: Führungsschnittstellen
- 26: Lagerungskörper
- 27: Behangstange-Kompensationseinheit
- 28: Führungsmittel-Kompensationseinheit
- 29: Antriebsvorrichtung
- 30: Getriebe
- 31: Seilzugsystem
- 32: Elektromotor
- 33: Umlenkrolle
- 34: Rollobehangraum
- 35: Federelement
- 36: Welle
- 37: Ausgleichslagerelement
- 38: Lagerzapfen
- 39: Ausgleichsaufnahmeabschnitt

- P1: Vorspannposition
- P2: Montageposition
- P3: Lagerposition
- P4: Führungsposition

- D1: Höhenrichtung
- D2: Radialrichtung
- D3: Auszugsrichtung
- D4: Schubrichtung

## Patentansprüche

1. Rollovorrichtung (10a; 10b) für eine Heckscheibe (11) eines Fahrzeugs (12), aufweisend einen Grundkörper (13) mit einer Befestigungsschnittstelle (14) für eine Befestigung des Grundkörpers (13) im Innenraum des Fahrzeugs (12), eine am Grundkörper (13) mittels einer Rotationslagerung (15) drehbar um eine Wickelachse (16) gelagerte Wickelwelle (17) mit einem darauf auf- und abwickelbaren Rollobehang (18) und zwei seitliche Führungsvorrichtungen (19) mit jeweils einem Führungsmittel (20) zum Führen einer Behangstange (21) des Rollobehangs (18) bei einer Wickelbewegung, wobei die Wickelwelle (17) an den beiden axialen Enden Montageschnittstellen (22) aufweist für eine kraftübertragende Verbindung mit dem jeweiligen Führungsmittel (20) der jeweiligen Führungsvorrichtung (19), wobei weiter die Wickelwelle (17) mittels einer Ausgleichslagerung (23) am Grundkörper (13) für eine Ausgleichsbewegung der Wickelachse (16) bei der Montage gelagert ist, **dadurch gekennzeichnet, dass** die Montageschnittstellen (22), für eine Spannbewegung zwischen einer Vorspannposition (P1) und einer Montageposition (P2) durch eine Spannkraft, gelagert sind und der Grundkörper (13) und/oder die Führungsvorrichtungen (19) Betätigungsmittel (24a; 24b) aufweisen für eine Bewegung der Montageschnittstellen (22) zwischen der Montageposition (P2) und der Vorspannposition (P1).

2. Rollovorrichtung (10a; 10b) nach einem der vorangegangenen Ansprüche, **dadurch gekennzeichnet, dass** die Behangstange (21) an ihren beiden axialen Enden Führungsschnittstellen (25) aufweist für eine Bewegung der Behangstange (21) aus einer Lagerposition (P3) in eine Führungsposition (P4) zur Ausbildung der kraftübertragenden Verbindung mit dem jeweiligen Führungsmittel (20).

3. Rollovorrichtung (10a; 10b) nach einem der vorangegangenen Ansprüche, **dadurch gekennzeichnet, dass** die Rotationslagerung (15) an einem Lagerungskörper (26) ausgebildet ist, welcher mittels der Ausgleichslagerung (23) am Grundkörper (13) gelagert ist.

4. Rollovorrichtung (10a; 10b) nach einem der vorangegangenen Ansprüche, **dadurch gekennzeichnet, dass** die Ausgleichslagerung (23) einen Ausgleichsfreiheitsgrad in einer Höhenrichtung (D1) und/oder einer Radialrichtung (D2) für die Wickelachse (16) vorgibt.

5. Rollovorrichtung (10a; 10b) nach einem der vorangegangenen Ansprüche, **dadurch gekennzeichnet, dass** die Behangstange (21) eine Behangstange-Kompensationseinheit (27) zur federnden Lagerung der Behangstange (21) bezüglich der Wickelachse (16) aufweist.

6. Rollovorrichtung (10a; 10b) nach einem der vorangegangenen Ansprüche, **dadurch gekennzeichnet, dass** wenigstens eines der Führungsmittel (20) eine Führungsmittel-Kompensationseinheit (28) aufweist für einen federnden Ausgleich der Behangstange (21) in einer Höhenrichtung (D1).

7. Rollovorrichtung (10a; 10b) nach einem der vorangegangenen Ansprüche, **dadurch gekennzeichnet, dass** eine Antriebsvorrichtung (29) bereitgestellt ist für eine Übertragung einer Antriebskraft auf die Wickelwelle (17) und/oder auf die Führungsmittel (20) zur Durchführung der Wickelbewegung.

8. Rollovorrichtung (10a; 10b) nach Anspruch 7, **dadurch gekennzeichnet, dass** die Antriebsvorrichtung (29) am Grundkörper (23) angeordnet ist und ein Getriebe (30) aufweist für eine Übertragung der Antriebskraft auf die Wickelwelle (17) und/oder die Führungsmittel (20).

9. Rollovorrichtung (10a; 10b) nach einem der Ansprüche 7 oder 8, **dadurch gekennzeichnet, dass** die Antriebsvorrichtung (29) einen Flachläufermotor für einen Direktantrieb einer der Montageschnittstellen (22) aufweist.

10. Rollovorrichtung (10a; 10b) nach einem der vorangegangenen Ansprüche, **dadurch gekennzeichnet, dass** die Führungsvorrichtungen (19) jeweils ein Seilzugsystem (31) aufweisen für einen Antrieb der Behangstange (21) in einer Auszugsrichtung (D3).

11. Verfahren für die Montage einer Rollovorrichtung (10a; 10b) mit den Merkmalen eines der voranstehenden Ansprüche, aufweisend die Schritte:
- Montieren des Grundkörpers (13) im Innenraum des Fahrzeugs (12),
- Montieren von jeweils einer Führungsvorrichtung (19) in jeweils einer C-Säule des Fahrzeugs (12),
- Ausbilden einer kraftübertragenden Verbindung zwischen den Führungsmitteln (20) und den Montageschnittstellen (22), und
- Ausgleichen von Fertigungstoleranzen mittels einer Ausgleichsbewegung der Wickelachse (16) durch die Ausgleichslagerung (23).

## Claims

1. Roller blind device (10a; 10b) for a rear window (11) of a vehicle (12), having a main body (13) with a fastening interface (14) for fastening the main body (13) in the interior of the vehicle (12), a winding shaft (17), mounted on the main body (13) so as to be rotatable around a winding axis (16) by means of a rotary bearing (15), with a roller blind (18) that can be rolled up and unrolled thereon and two lateral guide devices (19), each with a guide means (20) for guiding a blind rod (21) of the roller blind (18) during a winding movement, wherein the winding shaft (17) has mounting interfaces (22) at the two axial ends allowing a force-transmitting connection with the respective guide means (20) of the respective guide device (19), wherein the winding shaft (17) is further supported by means of a compensating bearing (23) on the main body (13) allowing a compensating movement of the winding axis (16) during installation, **characterised in that** the mounting interfaces (22) are mounted so as to bring about a clamping movement between a preload position (P1) and a mounting position (P2) under a clamping force, and the main body (13) and/or the guide devices (19) have actuators (24a; 24b) to bring about a movement of the mounting interfaces (22) between the mounting position (P2) and the preload position (P1).

2. Roller blind device (10a; 10b) according to one of the preceding claims, **characterised in that** the blind rod (21) has guide interfaces (25) at its two axial ends allowing a movement of the blind rod (21) from a storage position (P3) to a guide position (P4) in order to form the force-transmitting connection with the respective guide means (20).

3. Roller blind device (10a; 10b) according to one of the preceding claims, **characterised in that** the rotary bearing (15) is formed on a bearing body (26) which is mounted on the main body (13) by means of the compensating bearing (23).

4. Roller blind device (10a; 10b) according to one of the preceding claims, **characterised in that** the compensating bearing (23) determines a degree of freedom of compensation for the winding axis (16) in a height direction (D1) and/or a radial direction (D2).

5. Roller blind device (10a; 10b) according to one of the preceding claims, **characterised in that** the blind rod (21) has a blind rod compensation unit (27) allowing resilient mounting of the blind rod (21) with respect to the winding axis (16).

6. Roller blind device (10a; 10b) according to one of the preceding claims, **characterised in that** at least one of the guide means (20) has a guide means compensation unit (28) allowing a resilient compensation of the blind rod (21) in a height direction (D1).

7. Roller blind device (10a; 10b) according to one of the preceding claims, **characterised in that** a drive device (29) is provided allowing transmission of a driving force to the winding shaft (17) and/or to the guide means (20) in order to carry out the winding movement.

8. Roller blind device (10a; 10b) according to claim 7, **characterised in that** the drive device (29) is arranged on the main body (23) and has a gear (30) for transmission of the driving force to the winding shaft (17) and/or the guide means (20).

9. Roller blind device (10a; 10b) according to one of the claims 7 or 8, **characterised in that** the drive device (29) has a flat rotor motor allowing a direct drive of one of the mounting interfaces (22).

10. Roller blind device (10a; 10b) according to one of the preceding claims, **characterised in that** the guide devices (19) each have a cable pulley system (31) to drive the blind rod (21) in one extension direction (D3).

11. Method for mounting a roller blind device (10a; 10b) with the features of one of the preceding claims, comprising the steps:
- mounting the main body (13) in the interior of the vehicle (12),
- mounting one guide device (19) in each C-pillar of the vehicle (12),
- forming a force-transmitting connection between the guide means (20) and the mounting interfaces (22), and
- compensating manufacturing tolerances by means of a compensating movement of the winding axis (16) by the compensating bearing (23).

## Revendications

1. Dispositif de store enrouleur (10a ; 10b) pour une vitre arrière (11) d'un véhicule (12), ayant un corps principal (13) avec une interface de fixation (14) destinée à fixer le corps principal (13) à l'intérieur du véhicule (12), un arbre d'enroulement (17), monté sur le corps principal (13) de manière à être capable de rotation autour d'un axe d'enroulement (16) au moyen d'un palier de rotation (15), avec un store enrouleur (18) qui peut être enroulé et déroulé sur celui-ci et deux dispositifs de guidage latéraux (19), chacun avec un moyen de guidage (20) destiné à guider une tige de store (21) du store enrouleur (18) pendant un mouvement d'enroulement, dans lequel l'arbre d'enroulement (17) a des interfaces de montage (22) au niveau des deux extrémités axiales permettant une connexion de transmission de force avec le moyen de guidage (20) respectif du dispositif de guidage (19) respectif, dans lequel l'arbre d'enroulement (17) est supporté en outre au moyen d'un palier de compensation (23) sur le corps principal (13) permettant un mouvement de compensation de l'axe d'enroulement (16) pendant l'installation, **caractérisé en ce que** les interfaces de montage (22) sont montées de manière à amener un mouvement de serrage entre une position de précharge (P1) et une position de montage (P2) sous une force de serrage, et le corps principal (13) et/ou les dispositifs de guidage (19) ont des actionneurs (24a ; 24b) pour amener un mouvement des interfaces de montage (22) entre la position de montage (P2) et la position de précharge (P1).

2. Dispositif de store enrouleur (10a ; 10b) selon l'une des revendications précédentes, **caractérisé en ce que** la tige de store (21) a des interfaces de guidage (25) au niveau de ses deux extrémités axiales permettant un mouvement de la tige de store (21) d'une position de stockage (P3) à une position de guidage (P4) afin de former la connexion de transmission de force avec le moyen de guidage (20) respectif.

3. Dispositif de store enrouleur (10a ; 10b) selon l'une des revendications précédentes, **caractérisé en ce que** le palier de rotation (15) est formé sur un corps de palier (26) qui est monté sur le corps principal (13) au moyen du palier de compensation (23).

4. Dispositif de store enrouleur (10a ; 10b) selon l'une des revendications précédentes, **caractérisé en ce que** le palier de compensation (23) détermine un degré de liberté de compensation pour l'axe d'enroulement (16) dans une direction de hauteur (D1) et/ou une direction radiale (D2) .

5. Dispositif de store enrouleur (10a ; 10b) selon l'une des revendications précédentes, **caractérisé en ce que** la tige de store (21) a une unité de compensation de tige de store (27) permettant le montage élastique de la tige de store (21) par rapport à l'axe d'enroulement (16).

6. Dispositif de store enrouleur (10a ; 10b) selon l'une des revendications précédentes, **caractérisé en ce qu'**au moins l'un du moyen de guidage (20) a une unité de compensation de moyen de guidage (28) permettant une compensation élastique de la tige de support (21) dans une direction de hauteur (D1).

7. Dispositif de store enrouleur (10a ; 10b) selon l'une des revendications précédentes, **caractérisé en ce qu'**un dispositif d'entraînement (29) est fourni permettant la transmission d'une force d'entraînement à l'arbre d'enroulement (17) et/ou au moyen de guidage (20) afin de réaliser le mouvement d'enroulement.

8. Dispositif de store enrouleur (10a ; 10b) selon la revendication 7, **caractérisé en ce que** le dispositif d'entraînement (29) est agencé sur le corps principal (23) et a un engrenage (30) pour la transmission de la force d'entraînement à l'arbre d'enroulement (17) et/ou au moyen de guidage (20).

9. Dispositif de store enrouleur (10a ; 10b) selon l'une des revendications 7 ou 8, **caractérisé en ce que** le dispositif d'entraînement (29) a un moteur rotor plat permettant un entraînement direct de l'une des interfaces de montage (22) .

10. Dispositif de store enrouleur (10a ; 10b) selon l'une des revendications précédentes, **caractérisé en ce que** les dispositifs de guidage (19) ont chacun un système de poulie de câble (31) pour entraîner la tige de store (21) dans une direction d'extension (D3).

11. Procédé destiné à monter un dispositif de store enrouleur (10a ; 10b) avec les caractéristiques de l'une des revendications précédentes, comprenant les étapes suivantes :
- le montage du corps principal (13) à l'intérieur du véhicule (12),
- le montage d'un dispositif de guidage (19) dans chaque montant C du véhicule (12),
- la formation d'une connexion de transmission de force entre le moyen de guidage (20) et les interfaces de montage (22), et
- la compensation de tolérances de fabrication au moyen d'un mouvement de compensation de l'axe d'enroulement (16) par le palier de compensation (23).
